# EUROPÄISCHE PATENTSCHRIFT

(11) **EP 3 455 933 B1**
(45) Veröffentlichungstag und Bekanntmachung des Hinweises auf die Patenterteilung: **23.11.2022**
(21) Anmeldenummer: 17722461.5
(22) Anmeldetag: 10.05.2017
(51) Int. Cl.: H02M 3/158, H02M 1/00, G05F 1/569

(54) **SPANNUNGSWANDLER MIT VERPOLUNGSSCHUTZDIODE**
VOLTAGE TRANSFORMER HAVING A REVERSE POLARITY PROTECTION DIODE
CONVERTISSEUR DE TENSION MUNI D'UNE DIODE DE PROTECTION CONTRE LES INVERSIONS DE POLARITÉ

(30) Priorität: 13.05.2016 DE 102016108942
(43) Veröffentlichungstag der Anmeldung: 20.03.2019
(73) Patentinhaber: Phoenix Contact GmbH & Co. KG, 32825 Blomberg (DE)
(72) Erfinder: LUDWIG, Holger, 33100 Paderborn (DE); WESKAMP, Volker, 33014 Bad Driburg / Neuenheerse (DE)
(74) Vertreter: Patentship Patentanwaltsgesellschaft mbH
(86) Internationale Anmeldenummer: PCT/EP2017/061166
(87) Internationale Veröffentlichungsnummer: WO 2017/194598

(56) Entgegenhaltungen:
- EP-A1- 2 768 130
- EP-A1- 2 908 415
- EP-A2- 2 670 016
- DE-A1-102014 108 783
- FR-A1- 2 973 601
- US-B2- 8 717 717

## Beschreibung

Die vorliegende Erfindung betrifft das Gebiet der Spannungswandler zum Wandeln einer elektrischen Eingangsspannung in eine elektrische Ausgangsspannung.

Spannungswandler bezeichnen elektrische Schaltungen, welche zur Wandlung einer elektrischen Eingangsspannung in eine elektrische Ausgangsspannung eingesetzt werden. Sogenannte Gleichspannungswandler, welche eine Unterkategorie der Spannungswandler bilden, sind beispielsweise ausgebildet, eine elektrische Eingangsspannung in eine elektrische Ausgangsspannung umzusetzen, wobei sowohl die elektrische Eingangsspannung als auch die elektrischen Ausgangsspannung Gleichspannungen sind. Spannungswandler umfassen üblicherweise einen Schalter, beispielsweise einen Transistor, und reaktive Elemente, beispielsweise eine Drossel und einen Kondensator, wobei der Schalter periodisch geöffnet und geschlossen wird. Durch eine entsprechende Steuerung eines Tastgrades des Schalters kann mithin ein Betriebspunkt des Spannungswandlers eingestellt werden.

Die Eingangsstufen von Spannungswandern sind gegenüber einer Verpolung der elektrischen Eingangsspannung zumeist sehr empfindlich und können durch einen hohen rückwärtigen Stromfluss im Falle einer Verpolung beschädigt werden. Ein Einsatz von Brückengleichrichtern vor den Eingangsstufen der Spannungswandler oder ein Einbringen von Dioden in einen Laststromzweig der Spannungswandler ist zumeist mit hohen elektrischen Verlusten, insbesondere in den Dioden, verbunden.

Die Druckschrift US 8,717,717 B2 offenbart einen effizienten Leistungsregler mit einem Drei-Klemmen-Wandler und einem Schutzgerät. Die Druckschrift DE 10 2014 108 783 A1 offenbart einen DC-DC-Wandler umfassend eine Spannungsumwandlungsschaltung. Die Druckschrift FR 2 973 601 A1 offenbart eine elektrische Schaltung für ein Automobil mit einem Gleichstrom-Gleichstrom-Konverter. Die Druckschrift EP 2 768 130 A1 offenbart einen Gleichspannungswandler zur Konversion einer Batteriespannung für einen nachfolgenden Lastkreis. Die Druckschrift EP 2 670 016 A2 offenbart eine Vorrichtung und ein Verfahren zur photovoltaischen Energieerzeugung.

Es ist eine Aufgabe der vorliegenden Erfindung, ein effizientes Konzept zum Verpolungsschutz für Spannungswandler zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch ein Einbringen einer Verpolungsschutzdiode in einen Schalterzweig des Spannungswandlers gelöst werden kann, welche in Reihe zu einem Schalter des Spannungswandlers angeordnet ist. Die Verpolungsschutzdiode und der Schalter sind mithin in demselben Schalterzweig angeordnet. Dadurch wird der Vorteil erreicht, dass die Verpolungsschutzdiode nicht mit einem Laststrom des Spannungswandlers beaufschlagt wird. Die Verpolungsschutzdiode wird lediglich mit einem geschalteten Strom durch den Schalterzweig beaufschlagt, welcher einen wesentlich geringeren Effektivwert aufweisen kann. Zugleich kann die Verpolungsschutzdiode eine elektrische Eingangsspannung mit vertauschter Polarität aufnehmen und zugleich einen rückwärtigen Strom durch den Schalterzweig sperren. Mithin kann der Schalter durch das Einbringen der Verpolungsschutzdiode wirksam vor einer Beschädigung geschützt werden. Ferner kann eine elektrische Verlustleistung in der Verpolungsschutzdiode wirksam reduziert werden.

Gemäß einem ersten Aspekt betrifft die Erfindung einen Spannungswandler gemäß Anspruch 1. Dadurch wird der Vorteil erreicht, dass ein effizientes Konzept zum Verpolungsschutz für den Spannungswandler realisiert werden kann. Der Schalter kann ein beliebiger Halbleiterschalter sein. Die Verpolungsschutzdiode kann eine beliebige Halbleiterdiode sein.

Erfindungsgemäß ist ein Anschluss der Verpolungsschutzdiode, insbesondere ein Anodenanschluss oder ein Kathodenanschluss der Verpolungsschutzdiode, unmittelbar an einen Anschuss des Schalters geschaltet. Dadurch wird der Vorteil erreicht, dass ein effektiverer Verpolungsschutz realisiert werden kann. Die Verpolungsschutzdiode kann dem Schalter in dem Schalterzweig beispielsweise unmittelbar vorgeschaltet oder unmittelbar nachgeschaltet sein.

Erfindungsgemäß ist die Verpolungsschutzdiode ausgebildet, bei einer ersten Polarität der Eingangsspannung einen Strom durch den Schalterzweig zu leiten, und bei einer zweiten Polarität der Eingangsspannung einen Strom durch den Schalterzweig zu sperren. Dadurch wird der Vorteil erreicht, dass ein effektiverer Verpolungsschutz realisiert werden kann. Die erste Polarität entspricht beispielsweise einer Polarität der Eingangsspannung im Normalbetrieb des Spannungswandlers. Die zweite Polarität kann der ersten Polarität entgegengesetzt sein. Die zweite Polarität entspricht beispielsweise einer Polarität der Eingangsspannung im Falle einer Verpolung.

Gemäß einer Ausführungsform ist der Schalter ein Bipolar-Transistor, ein Metall-Oxid-Halbleiter Feldeffekt-Transistor (engl. Metal-Oxide-Semiconductor Field-Effect-Transistor, MOSFET), ein Bipolar-Transistor mit isolierter Gate-Elektrode (engl. Insulated-Gate Bipolar-Transistor, IGBT), oder ein Sperrschicht Feldeffekt-Transistor (engl. Junction Field-Effect-Transistor, JFET). Dadurch wird der Vorteil erreicht, dass der Schalter effizient implementiert werden kann.

Gemäß einer Ausführungsform ist die Verpolungsschutzdiode eine Schottky-Diode. Dadurch wird der Vorteil erreicht, dass eine niedrige Flussspannung der Verpolungsschutzdiode realisiert werden kann. Kommt eine Siliziumcarbid (SiC) Schottky-Diode als Verpolungsschutzdiode zur Anwendung, kann ein elektrischer Verlust in der Verpolungsschutzdiode weiter reduziert werden.

Durch den Einsatz einer Schottky-Diode, beispielsweise anstelle einer PN-Diode oder einer PiN-Diode, kann die Flussspannung der Verpolungsschutzdiode abgesenkt werden. Eine Siliziumcarbid (SiC) Schottky-Diode kann als Leistungsdiode eine höhere Flussspannung als Silizium-Dioden anderer Art aufweisen. Eine Siliziumcarbid (SiC) Schottky-Diode zeichnet sich jedoch durch geringere Schaltverluste, insbesondere durch einen reduzierten Reverse-Recovery-Effekt, aus, wodurch die Schaltverluste weiter reduziert werden können.

Erfindungsgemäß umfasst der Spannungswandler einen Strommesswiderstand, welcher in dem Schalterzweig in Reihe mit dem Schalter und der Verpolungsschutzdiode geschaltet ist. Dadurch wird der Vorteil erreicht, dass ein Strom durch den Schalterzweig effizient erfasst werden kann. Der Strommesswiderstand kann ein niederohmiger Widerstand sein.

Gemäß einer Ausführungsform ist der Spannungswandler ein Gleichspannungswandler, insbesondere ein Hochsetzsteller. Dadurch wird der Vorteil erreicht, dass der Verpolungsschutz effizient realisiert werden kann. Der Hochsetzsteller ist ausgebildet, eine elektrische Eingangsspannung in eine höhere elektrische Ausgangsspannung zu wandeln.

Gemäß einem zweiten Aspekt betrifft die Erfindung ein Spannungswandlungssystem gemäß Anspruch 6. Dadurch wird der Vorteil erreicht, dass ein effizientes Konzept zum Verpolungsschutz für den Spannungswandler und den Hauptspannungswandler realisiert werden kann. Der Hauptspannungswandler kann ein beliebiger Spannungswandler, insbesondere ein beliebiger Gleichspannungswandler oder ein beliebiger Wechselspannungswandler, sein.

Gemäß einer Ausführungsform ist die Steuerung ausgebildet, die Eingangsspannung des Spannungswandlers mit einer weiteren Vergleichsspannung zu vergleichen, wobei die weitere Vergleichsspannung größer als die Vergleichsspannung ist, und wobei die Steuerung ausgebildet ist, den Spannungswandler zu deaktivieren, falls die elektrische Eingangsspannung des Spannungswandlers die weitere Vergleichsspannung überschreitet. Dadurch wird der Vorteil erreicht, dass der Hauptspannungswandler effizient betrieben werden kann.

Gemäß einem dritten Aspekt betrifft die Erfindung ein Verfahren nach Anspruch 8. Dadurch wird der Vorteil erreicht, dass ein effizientes Konzept zum Verpolungsschutz für den Spannungswandler und den Hauptspannungswandler realisiert werden kann.

Das Verfahren kann durch das Spannungswandlungssystem ausgeführt werden. Weitere Merkmale des Verfahrens ergeben sich unmittelbar aus der Funktionalität und/oder den Merkmalen des Spannungswandlungssystems.

Gemäß einer Ausführungsform umfasst das Verfahren ein Vergleichen der Eingangsspannung des Spannungswandlers mit einer weiteren Vergleichsspannung durch die Steuerung, wobei die weitere Vergleichsspannung größer als die Vergleichsspannung ist, und ein Deaktivieren des Spannungswandlers durch die Steuerung, falls die elektrische Eingangsspannung des Spannungswandlers die weitere Vergleichsspannung überschreitet. Dadurch wird der Vorteil erreicht, dass der Hauptspannungswandler effizient betrieben werden kann.

Weitere Ausführungsbeispiele werden Bezug nehmend auf die beiliegenden Zeichnungen näher erläutert. Es zeigen:
- Fig. 1: ein schematisches Diagramm eines Spannungswandlungssystems mit Gleichspannungseingang;
- Fig. 1a: ein schematisches Diagramm eines Spannungswandlungssystems mit Gleichspannungseingang und einem eingangsseitigen mittleren Gleichspannungspotentialeingang;
- Fig. 2: ein schematisches Diagramm eines Spannungswandlungssystems mit Gleichspannungseingang;
- Fig. 2a: ein schematisches Diagramm eines Spannungswandlungssystems mit Gleichspannungseingang und einem eingangsseitigen mittleren Gleichspannungspotentialeingang;
- Fig. 3: ein schematisches Diagramm eines Hochsetzstellers als Spannungswandler in einem positiven Leitungspfad;
- Fig. 4a bis 4f: schematische Diagramme von Halbleiterschaltern als Schalter;
- Fig. 5a und 5b: schematische Diagramme von Spannungswandlungssystemen;
- Fig. 6: ein schematisches Diagramm eines Hochsetzstellers als Spannungswandler in einem positiven Leitungspfad mit einer Verpolungsschutzdiode;
- Fig. 6a: ein schematisches Diagramm eines Hochsetzstellers als Spannungswandler in einem positiven Leitungspfad mit einer Verpolungsschutzdiode;
- Fig. 7: schematische Diagramme von Stromverläufen durch eine Drossel und einen Schalter eines Hochsetzstellers als Spannungswandler;

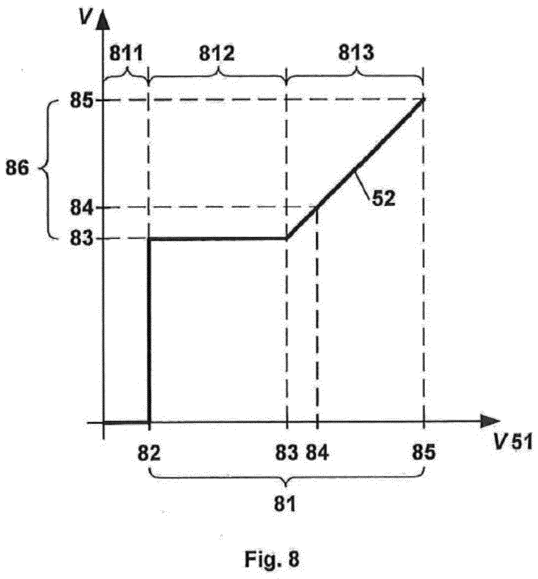

- Fig. 8: ein schematisches Diagramm einer Spannungskennlinie für ein Spannungswandlungssystem und ein Verfahren zum Betrieb eines Spannungswandlungssystems;
- Fig. 9: ein schematisches Diagramm eines Hochsetzstellers als Spannungswandler in einem negativen Leitungspfad;
- Fig. 10: ein schematisches Diagramm eines Hochsetzstellers als Spannungswandler in einem negativen Leitungspfad mit einer Verpolungsschutzdiode;
- Fig. 10a: ein schematisches Diagramm eines Hochsetzstellers als Spannungswandler in einem negativen Leitungspfad mit einer Verpolungsschutzdiode;
- Fig. 11: ein schematisches Diagramm eines symmetrischen Hochsetzstellers als symmetrischen Spannungswandler;
- Fig. 12: ein schematisches Diagramm eines symmetrischen Hochsetzstellers als symmetrischen Spannungswandler mit einer Verpolungsschutzdiode;
- Fig. 12a bis 12c: schematische Diagramme von symmetrischen Hochsetzstellern als symmetrische Spannungswandler mit einer Verpolungsschutzdiode;
- Fig. 13: ein schematisches Diagramm eines symmetrischen Hochsetzstellers als symmetrischen Spannungswandler mit einem eingangsseitigen Mittenpotentialeingang;
- Fig. 14: ein schematisches Diagramm eines symmetrischen Hochsetzstellers als symmetrischen Spannungswandler mit einem eingangsseitigen Mittenpotentialeingang und mit einer Verpolungsschutzdiode; und
- Fig. 14a bis 14c: schematische Diagramme von symmetrischen Hochsetzstellern als symmetrische Spannungswandler mit einem eingangsseitigen Mittenpotentialeingang und mit einer Verpolungsschutzdiode.

Das Konzept zur Realisierung eines Verpolungsschutzes kann beispielsweise Anwendung finden in einem mehrstufigen Spannungswandlungssystem 1, in welchem eine der ersten aktiven Eingangsstufen ein Spannungswandler 20, insbesondere ein Hochsetzsteller, mit Gleichspannungseingang ist. Das Spannungswandlungssystem 1 kann ein reines DC/DC Spannungswandlungssystem aber auch DC/AC Spannungswandlungssystem in einphasiger oder mehrphasiger Ausführung sein. Das Spannungswandlungssystem 1 kann einen weiten Eingangsspannungsbereich aufweisen und mittels eines vorteilhaften Verfahrens betrieben werden. Das Spannungswandlungssystem 1 kann ein Konverter mit Gleichspannungseingang sein.

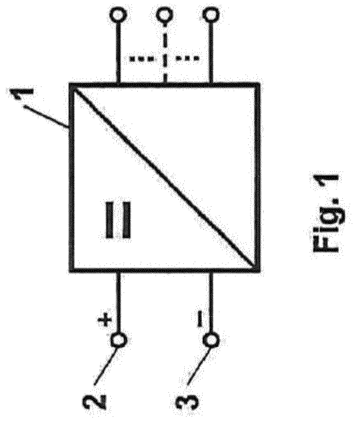

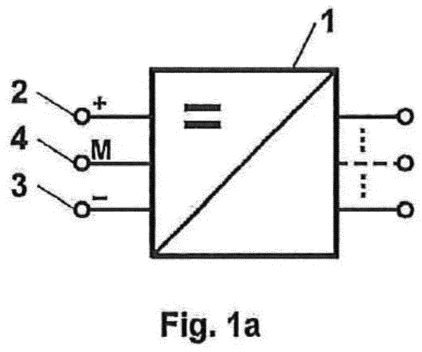

Bei einem Spannungswandlungssystem mit Gleichspannungseingang ist im Unterscheid zu einem Spannungswandlungssystem mit Wechselspannungseingang, bei welchem der Anschluss der Eingangsklemmen aufgrund einer vorhandenen Gleichrichtung beliebig sein kann, ein Gleichrichter in der Regel nicht vorhanden. Dadurch, dass ein beliebiger Anschluss der Eingangsklemmen 2 und 3 an das Spannungswandlungssystem 1 mit Gleichspannungseingang aus Fig. 1 möglich ist, sollte für die meisten Topologien sichergestellt werden, dass an die Eingangsklemme 2 das höhere und an die Eingangsklemme 3 das niedrigere Eingangspotential angeschlossen wird. Ansonsten kann es zur Beschädigung von Komponenten durch einen rückwärtigen Stromfluss oder durch die verpolte Eingangsspannung kommen.

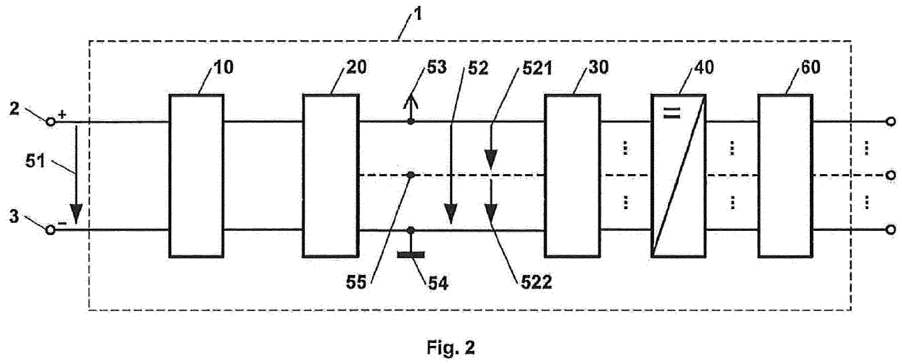

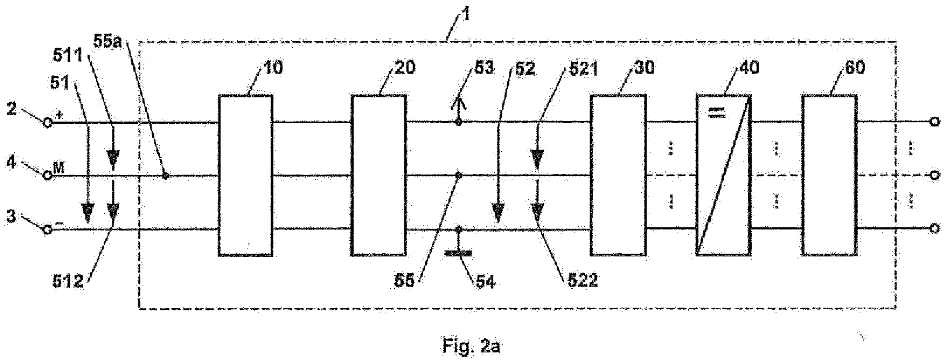

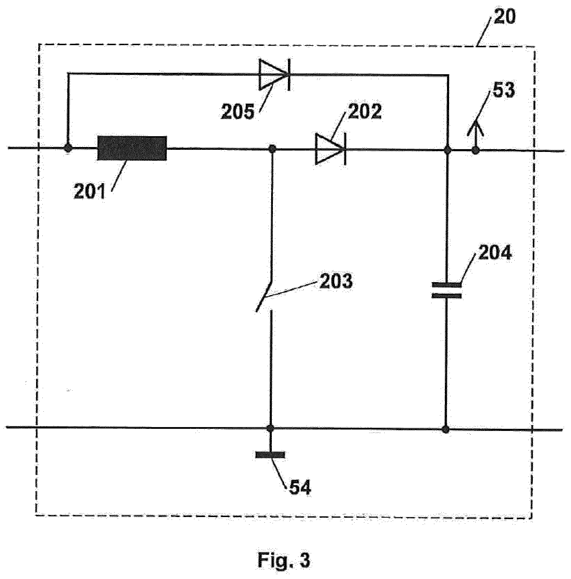

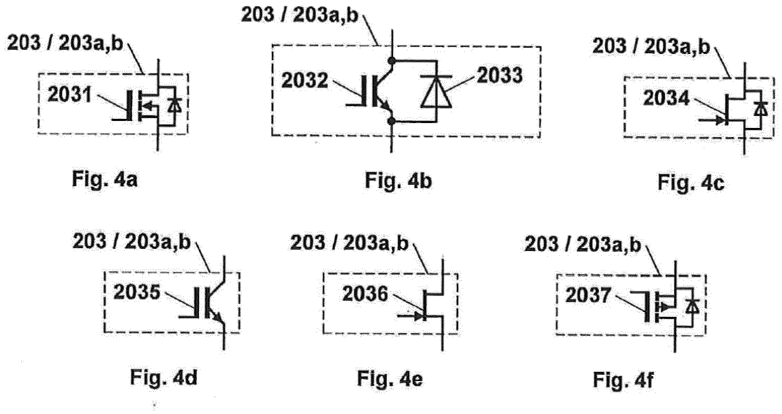

Im Falle eines mehrstufigen Spannungswandlungssystems 1 mit Gleichspannungseingang, welches in Fig. 2 detaillierter gezeigt ist, ist bei Verwendung eines Hochsetzstellers als Spannungswandler 20, dessen Ausführungsformen detaillierter in Fig. 3, Fig. 9 und Fig. 11 dargestellt sind, der Schalter 203 / 203a,b vor einem umgekehrten Stromfluss oder einer rückwärtig anliegenden Spannung zu schützen, insbesondere wenn der Spannungswandler 20 eine der ersten Stufen im gesamten Spannungswandlungssystem 1 bildet und zuvor keine weitere Stufe eine Verpolung der Eingangsspannung verhindern kann. Ein umgekehrter Stromfluss ist insbesondere bei den Halbleiterschaltern, welche in Fig. 4 detaillierter gezeigt sind, und welche eine parasitäre Body-Diode oder eine Freilauf-Diode besitzen, zu verhindern. Dies betrifft unter anderem die MOSFETs 2031 und 2037, den IGBT 2032 mit Freilauf-Diode 2033 oder den JFET 2034 mit parasitärer Body-Diode. Durch diese Dioden kann ein durch die Drossel 201 des Spannungswandlers 20 nicht ausreichend begrenzter Kurzschlussstrom fließen, den eine Sicherung in einer typischen Eingangsstufe 10 nicht rechtzeitig abzuschalten vermag. Eine über dem Schalter 203 / 203a,b rückwärtig anliegende Spannung ist bei allen Schaltern zu verhindern, die nicht in der Lage sind, rückwärtige Spannungen zu sperren, z.B. der IGBT 2035 ohne zusätzliche Freilauf-Diode.

Die Zwischenkreisstufe 30 des Spannungswandlungssystems 1 ist für den Fall, dass es sich um eine Spannungszwischenkreisstufe handelt, durch die Freilauf-Diode 202 / 202a,b und die Bypass-Diode 205 / 205a,b, wenn vorhanden, bereits vor einer Verpolung geschützt. Ein Hauptspannungswandler 40 des Spannungswandlungssystems 1, welcher je nach Typ eine Umsetzung der Eingangsspannung in eine Wechselspannung oder eine Gleichspannung in galvanisch gekoppelter oder galvanisch getrennter Ausführung realisiert, ist ebenso durch die Freilauf-Dioden 202 / 202a,b und die Bypass-Dioden 205 / 205a,b des Spannungswandlers 20 vor einer Verpolung geschützt. Weitere sekundärseitig angeordnete Komponenten, wie z.B. eine Ausgangsfilterstufe 60, werden in der Regel von einer verpolten Eingangsspannung nicht negativ beeinflusst, sodass sich dort keine zu erwartende Zerstörung von Komponenten ergibt.

Bei einer Ausführungsform, die in Fig. 1a und Fig. 2a dargestellt ist, kann am Eingang des Spannungswandlungssystems mit Gleichspannungseingang 1 ein weiteres Potential M an einer Eingangsklemme 4 vorhanden sein, welches spannungstechnisch zwischen den beiden Potentialen der Eingangsklemmen 2 und 3 als mittleres Potential 55a angeordnet ist und beispielsweise das halbe Potential zwischen den beiden Potentialen der Eingangsklemmen 2 und 3 und somit das Mittenpotential 55 annehmen kann. Auch in diesem Fall ist für die richtige Polarität der beiden Eingangsspannungen zu sorgen und bei Verpolung einer oder beider Eingangsspannungen ein Schutz vor Zerstörung von Komponenten zu gewährleisten.

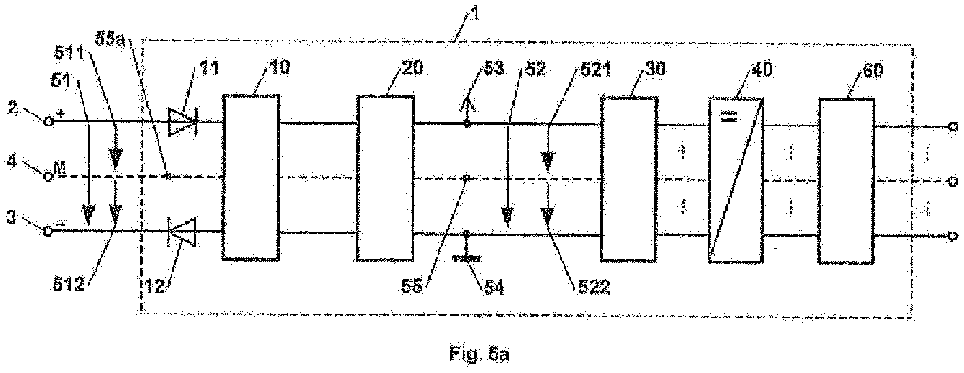

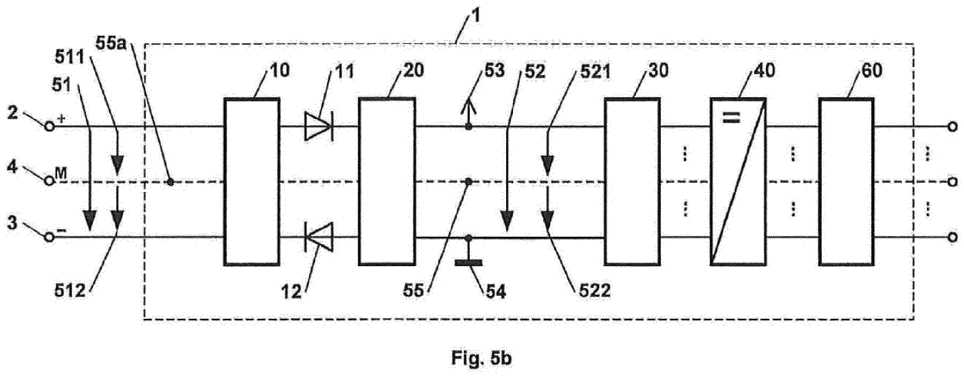

Um einen vertauschten Anschluss der Eingangsspannung 51 an den Eingangsklemmen 2 und 3 zu berücksichtigen, kann in die Leitungen beispielsweise im Eingangsbereich wahlweise, wie in Fig. 5a gezeigt, vor oder, wie in Fig. 5b gezeigt, hinter der Eingangsstufe 10 eine oder auch zwei Dioden 11 und 12 eingebracht werden. Die Eingangsstufe 10 kann unter anderem Sicherungen, Filterelemente und Überspannungsschutzelemente umfassen. Mindestens eine oder beide Dioden 11 und 12 zusammen, welche mit geeigneter Stromflussrichtung in die Schaltung eingebracht werden, können einen umgekehrten Stromfluss sowie eine umgekehrte Eingangsspannung 51 beim Vertauschen der Eingangspotentiale an den Eingangsklemmen 2 und 3 verhindern, welche zur Zerstörung von Komponenten führen kann. Beide Dioden 11 und 12 werden typischerweise eingesetzt, wenn die Ausführungsform aus Fig. 2a vorliegt und das mittlere Potential 55a an der Eingangsklemme 4 vorhanden ist. Dann können beide Dioden 11 und 12 zusammen verhindern, dass keine der beiden Teileingangsspannungen 511 und 512 falsch herum angeschaltet werden.

Das Einbringen der Dioden 11 und/oder 12 in einen Eingangszweig des Spannungswandlungssystems 1 führt jedoch dazu, dass diese Dioden 11 und/oder 12 im Leistungspfad des Spannungswandlungssystems 1 liegen und somit kontinuierlich den gesamten Laststrom tragen. Durch den Stromfluss durch eine Diode wird an dieser ein Spannungsabfall hervorgerufen, welcher zu elektrischen Verlusten an der Diode führt. Vorteilhaft ist es daher, den Verpolungsschutz aus dem Hauptleistungspfad oder Laststrompfad heraus zu halten, um die elektrischen Verluste zu reduzieren.

Eine Möglichkeit hierfür besteht darin, eine Verpolungsschutzdiode 206 in den Schalterzweig 209 des Spannungswandlers 20 einzubringen, wo sie durch den getakteten Betrieb des Schalters 203 einen geringeren effektiven Strom trägt. Somit werden geringere elektrische Verluste erzeugt. Die vorteilhafte Anordnung der Verpolungsschutzdiode 206 bezüglich des Schalters 203 kann von den eingesetzten Typen und deren Ansteuerung abhängen.

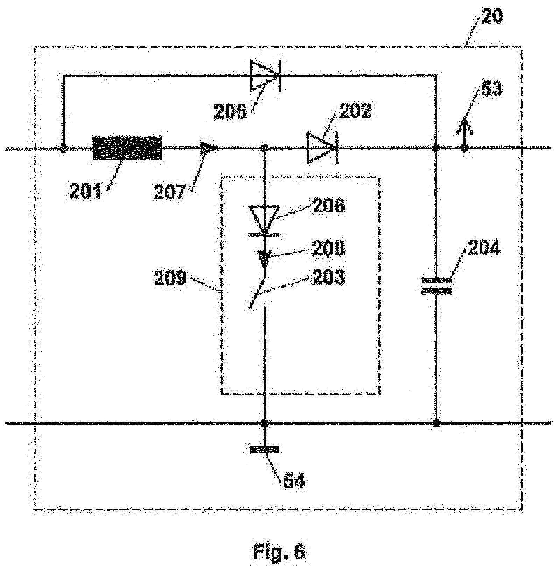

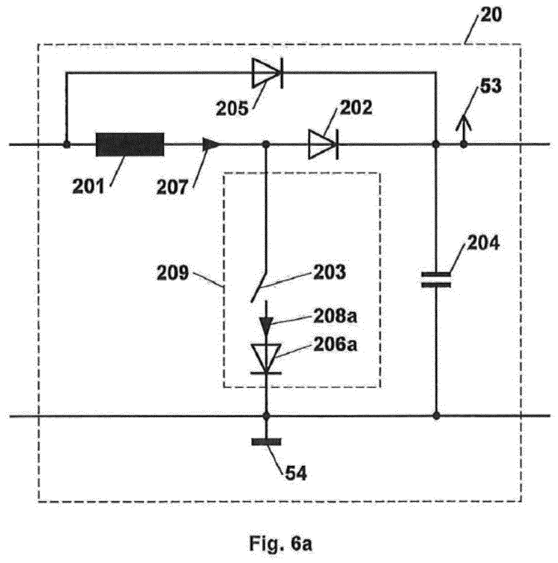

Im Folgenden wird eine erste Ausführungsform näher erläutert. Die Verpolungsschutzdiode 206 wird hierbei in einen Hochsetzsteller als Spannungswandler 20 im positiven Leitungszweig aus Fig. 3 oberhalb des Schalters 203 derart eingebracht, dass der Anodenanschluss, wie in Fig. 6 dargestellt, am Knotenpunkt der Drossel 201 und der Freilauf-Diode 202 des Hochsetzstellers als Spannungswandler 20 angeschlossen ist und der Kathodenanschluss an den Schalter 203 angeschlossen ist. Durch diese Anordnung eines zusätzlichen Elementes in den Schalterzweig 209 des Hochsetzsetzstellers als Spannungswandler 20 hat dieses keinen Einfluss auf den Ansteuerkreis des Schalters 203, wenn dessen Steueranschluss gegenüber dem Massepotential 54 mit einer Spannung beaufschlagt wird, wie z.B. bei einem MOSFET 2031 eines N-Kanal Typs oder bei einem IGBT 2032 / 2035.

Der Schalter 203 ist ausgebildet, einen Schaltungspfad zwischen Eingangsklemmen des Spannungswandlers 20 zu schließen. Der Schaltungspfad verläuft von einer ersten Eingangsklemme des Spannungswandlers 20 über die Drossel 201 und den Schalterzweig 209 zu einer zweiten Eingangsklemme des Spannungswandlers 20.

Bei Halbleitertypen, die nicht gegen das Massepotential 54 angesteuert werden, kann die Verpolungsschutzdiode 206a wahlweise auch unterhalb des Schalters 203 eingebracht werden, wobei der Kathodenanschluss dann wie in Fig. 6a mit dem Knotenpunkt des Massepotentials 54 des Hochsetzstellers als Spannungswandler 20 und der Anodenanschluss mit dem Schalter 203 verbunden werden kann. Ferner können weitere Elemente in den Schalterzweig 209 eingebracht werden, beispielsweise Messwiderstände zur Stromerfassung eines Stromes 208 / 208a durch den Schalter 203. In den Schalterzweig 209 des Hochsetzstellers als Spannungswandler 20 eingebracht, verhindert die Verpolungsschutzdiode 206 / 206a einen umgekehrten Stromfluss durch eine Body- oder Freilauf-Diode des Schalters 203 im Falle einer vertauschten Eingangsspannung 51. Weiterhin übernimmt sie auch die durch die Verpolung entstehende rückwärtige Spannung im Schalterzweig 209, welche ansonsten den Schalter 203 zerstören kann, wenn dieser keine Body- oder Freilauf-Diode umfasst und rückwärtige Spannungen nicht zu sperren vermag. Die Dioden 11 und/oder 12 im Eingangszweig können mithin entfallen.

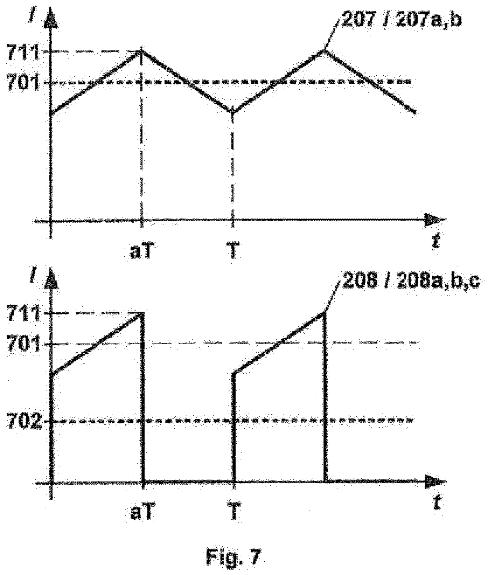

Für die Reduzierung von elektrischen Verlusten ist die Anordnung der Verpolungsschutzdiode 206 / 206a vorteilhaft, da der Strom 208 / 208a durch die Verpolungsschutzdiode 206 / 206a nur dann fließt, wenn der Schalter 203 des Hochsetzstellers als Spannungswandler 20 geschlossen ist. Mithin fließt der Strom nicht kontinuierlich. Dabei erreicht der gepulste Strom 208 / 208a, wie in Fig. 7 gezeigt, einen deutlich geringeren Effektivwert 702 als der Strom 207 durch die Drossel 201, dessen Effektivwert 701 dem des Eingangsstroms entspricht und den Spitzenwert 711 erreicht. Dadurch ergeben sich verringerte elektrische Verluste in der Verpolungsschutzdiode 206 / 206a im Gegensatz zu der Variante mit den Dioden 11 und/oder 12 im Eingangszweig. Je näher die Eingangsspannung 51 und die zu erreichende hochgesetzte Zwischenkreisspannung 83 beieinander liegen, desto geringer werden die elektrischen Verluste in der Verpolungsschutzdiode 206 / 206a. Dabei läuft ein Tastgrad a des Schalters 203 des Hochsetzstellers als Spannungswandler 20 gegen Null und der Schalter 203 ist für immer kürzere Zeiten eingeschaltet, wodurch auch der Effektivwert 702 oder Mittelwert des Stromes 208 / 208a durch die Verpolungsschutzdiode 206 / 206a gegen Null geht. Minimale elektrische Verluste durch die Verpolungsschutzdiode 206 / 206a ergeben sich, wenn der Hochsetzsteller als Spannungswandler 20 nicht betrieben wird und der Effektivwert 702 oder Mittelwert des Stromes 208 / 208a durch die Verpolungsschutzdiode 206 / 206a Null ist. Die elektrische Ausgangsspannung des Spannungswandlers 20 wird durch einen Kondensator 204 gestützt.

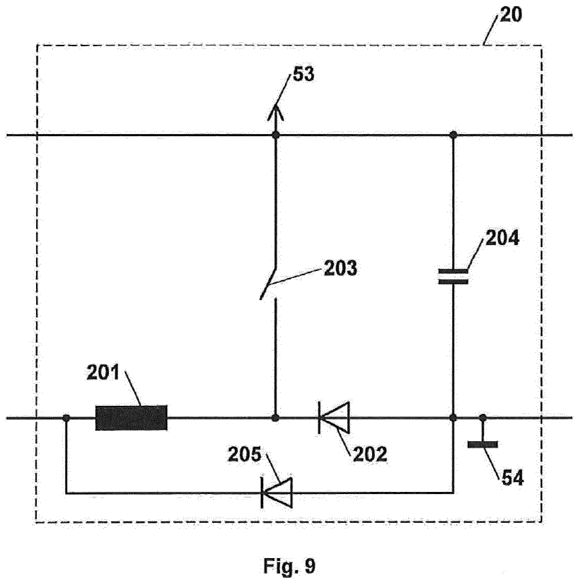

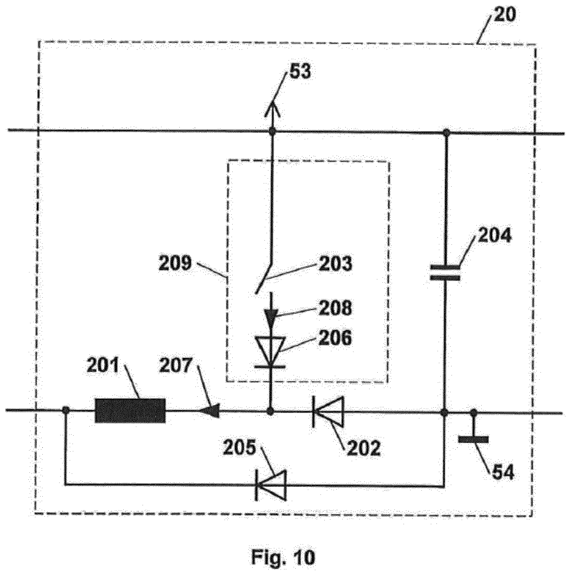

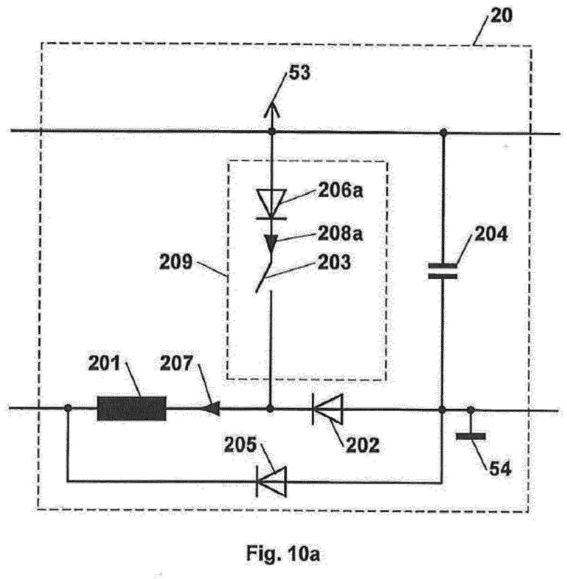

Im Folgenden wird eine zweite Ausführungsform näher erläutert. Die Verpolungsschutzdiode 206 wird dabei in einen Hochsetzsteller als Spannungswandler 20 im negativen Leitungszweig aus Fig. 9 unterhalb des Schalters 203 derart eingebracht, dass der Kathodenanschluss, wie in Fig. 10 gezeigt, am Knotenpunkt der Drossel 201 und der Freilauf-Diode 202 des Hochsetzstellers als Spannungswandler 20 angeschlossen ist und der Anodenanschluss an den Schalter 203 angeschlossen ist. Durch diese Anordnung eines zusätzlichen Elementes in den Schalterzweig 209 hat dieses keinen Einfluss auf einen Ansteuerkreis des Schalters 203, wenn dessen Steueranschluss gegenüber dem positiven Potential 53 mit einer Spannung beaufschlagt wird, wie z.B. bei einem MOSFET 2037 eines P-Kanal Typs.

Der Schalter 203 ist ausgebildet, einen Schaltungspfad zwischen Eingangsklemmen des Spannungswandlers 20 zu schließen. Der Schaltungspfad verläuft von einer ersten Eingangsklemme des Spannungswandlers 20 über die Drossel 201 und den Schalterzweig 209 zu einer zweiten Eingangsklemme des Spannungswandlers 20.

Bei Halbleiterschaltern, die nicht gegen das positive Potential 53 angesteuert werden, kann die Verpolungsschutzdiode 206a wahlweise auch oberhalb des Schalters 203 eingebracht werden, wobei der Anodenanschluss dann wie in Fig. 10a mit dem Knotenpunkt des positiven Potentials 53 des Hochsetzstellers als Spannungswandler 20 verbunden wird und der Kathodenanschluss mit dem Schalter 203. Ferner können weitere Elemente in den Schalterzweig 209 eingebracht werden, beispielsweise Messwiderstände zur Stromerfassung eines Stromes 208 / 208a durch den Schalter 203. Die elektrische Ausgangsspannung des Spannungswandlers 20 wird durch einen Kondensator 204 gestützt.

Es ergeben sich die gleiche Wirkungsweise gegenüber vertauschten Eingangspotentialen sowie die gleichen Vorteile hinsichtlich der elektrischen Verluste bezüglich des durch die Verpolungsschutzdiode fließenden Stroms, wie bereits hinsichtlich der ersten Ausführungsform beschrieben wurde.

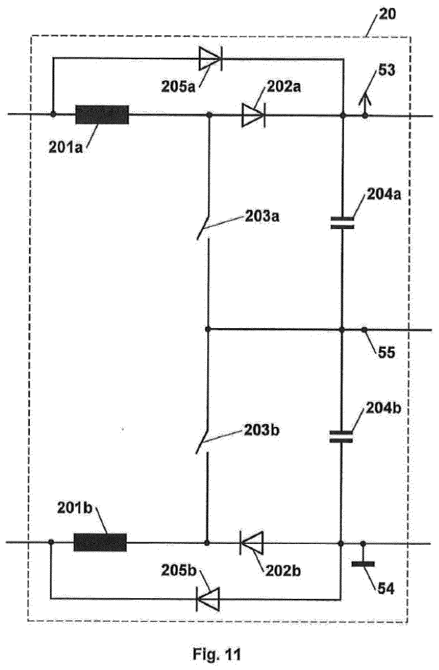

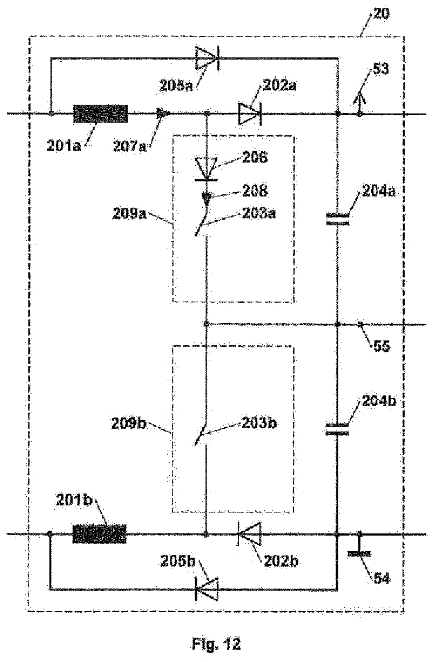

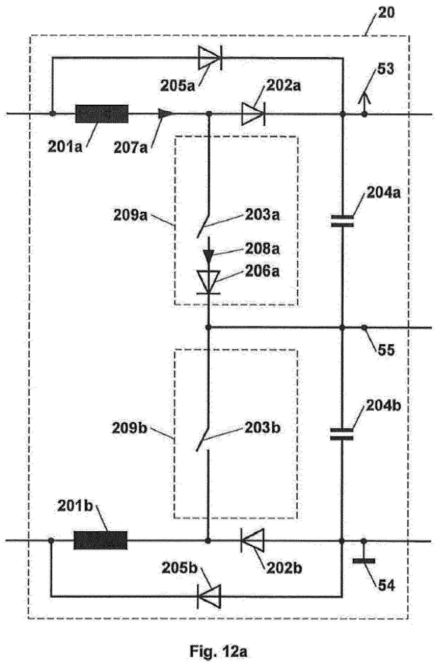

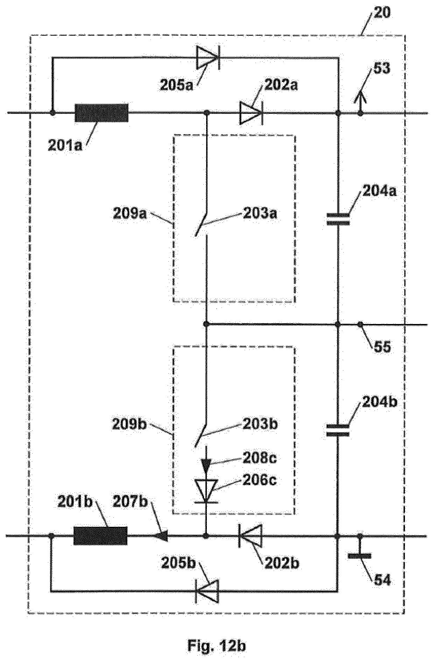

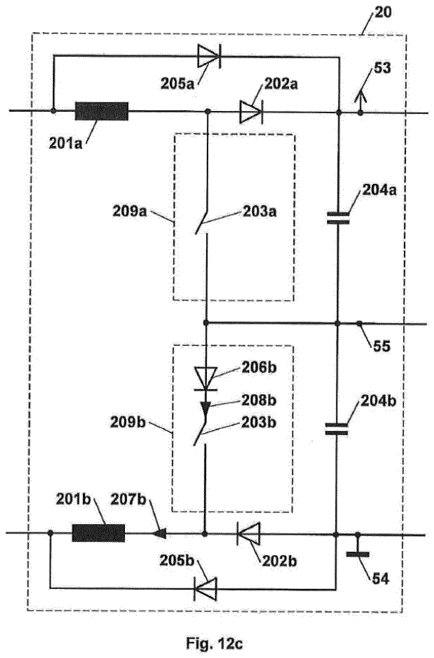

Im Folgenden wird eine dritte Ausführungsform näher erläutert. Die Verpolungsschutzdiode 206 wird dabei in einen symmetrischen Hochsetzsteller als symmetrischen Spannungswandler 20, wie in Fig. 11 gezeigt, oberhalb des Schalters 203a derart eingebracht, dass der Anodenanschluss, wie in Fig. 12 gezeigt, am Knotenpunkt der Drossel 201a und der Freilauf-Diode 202a des Hochsetzstellers als Spannungswandler 20 angeschlossen wird und der Kathodenanschluss an den Schalter 203a angeschlossen wird. Durch diese Anordnung eines zusätzlichen Elementes in den oberen Schalterzweig 209a hat dieses keinen Einfluss auf den Ansteuerkreis des Schalters 203a, wenn dessen Steueranschluss gegenüber dem Mittenpotential 55 mit einer Spannung beaufschlagt wird, wie z.B. bei einem MOSFET 2031 eines N-Kanal Typs oder bei einem IGBT 2032 / 2035.

Die Schalter 203a und 203b sind ausgebildet, einen Schaltungspfad zwischen Eingangsklemmen des Spannungswandlers 20 zu schließen. Der Schaltungspfad verläuft von einer ersten Eingangsklemme des Spannungswandlers 20 über die Drossel 201a, den Schalterzweig 209a, den Schalterzweig 209b und die Drossel 201b zu einer zweiten Eingangsklemme des Spannungswandlers 20.

Bei Halbleiterschaltern, die nicht gegen das Mittenpotential 55 angesteuert werden, kann die Verpolungsschutzdiode 206a wahlweise auch unterhalb des Schalters 203a eingebracht werden, wobei der Kathodenanschluss dann wie in Fig. 12a mit dem Knotenpunkt des Mittenpotentials 55 des Hochsetzstellers als Spannungswandler 20 verbunden wird und der Anodenanschluss mit dem Schalter 203a verbunden wird. Ferner können weitere Elemente in den Schalterzweig 209a eingebracht werden, beispielsweise Messwiderstände zur Stromerfassung des Stromes 208 / 208a durch den Schalter 203a.

Analog zur beschriebenen Möglichkeit, die Verpolungsschutzdiode 206 / 206a in den oberen Schalterzweig 209a des symmetrischen Hochsetzstellers als symmetrischen Spannungswandler 20 einzubringen, besteht die Möglichkeit, eine Verpolungsschutzdiode in den unteren Schalterzweig 209b des symmetrischen Hochsetzstellers als symmetrischen Spannungswandler 20 einzubringen. Durch die Variante der Einbringung der Verpolungsschutzdiode 206c unterhalb des Schalters 203b, bei welcher der Kathodenanschluss, wie in Fig. 12b gezeigt, mit dem Knotenpunkt der Drossel 201b und der Freilauf-Diode 202b des Hochsetzstellers als Spannungswandler 20 verbunden wird und der Anodenanschluss mit dem Schalter 203b verbunden wird, ergibt sich keine Beeinflussung der Ansteuerung von Schaltern, insbesondere Halbleiterschaltern, deren Steueranschluss gegen das Mittenpotential 55 mit einer Spannung beaufschlagt wird. Für Halbleiterschalter, die nicht gegen das Mittenpotential 55 angesteuert werden, besteht die Möglichkeit der Einbringung der Verpolungsschutzdiode 206b oberhalb des Schalters 203b, wie es in Fig. 12c gezeigt ist, wobei der Anodenanschluss mit dem Mittenpotential 55 des Hochsetzstellers als Spannungswandler 20 verbunden und der Kathodenanschluss mit dem Schalter 203b verbunden ist. Ferner können weitere Elemente in den Schalterzweig 209b eingebracht werden, beispielsweise Messwiderstände zur Stromerfassung des Stromes 208b / 208c durch den Schalter 203b. Die elektrische Ausgangsspannung des Spannungswandlers 20 wird durch einen Kondensator 204a und einen Kondensator 204b gestützt.

Es ergeben sich die gleiche Wirkungsweise gegenüber vertauschten Eingangspotentialen, wobei für den symmetrischen Hochsetzsteller als symmetrischen Spannungswandler 20 die Einbringung in einen der beiden Schalterzweige 209a oder 209b ausreichend sein kann, sowie die gleichen Vorteile hinsichtlich der elektrischen Verluste bezüglich des durch die Verpolungsschutzdiode fließenden Stroms, wie bereits hinsichtlich der ersten Ausführungsform beschrieben wurde.

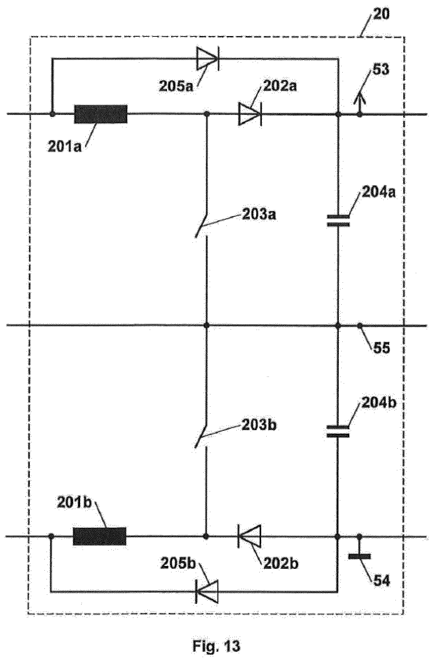

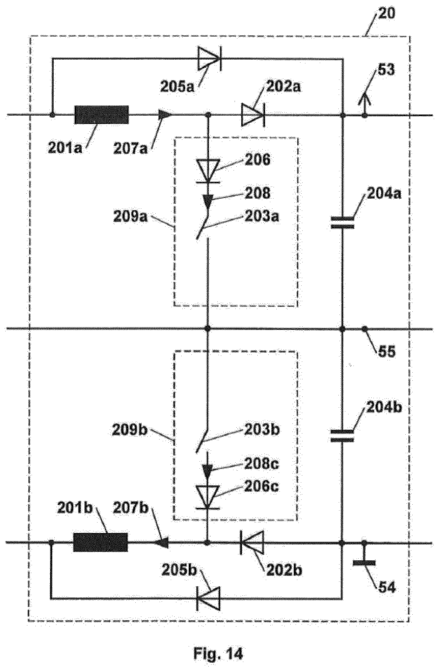

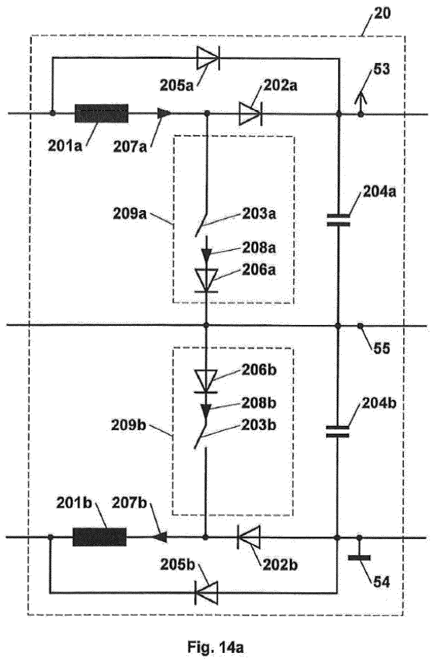

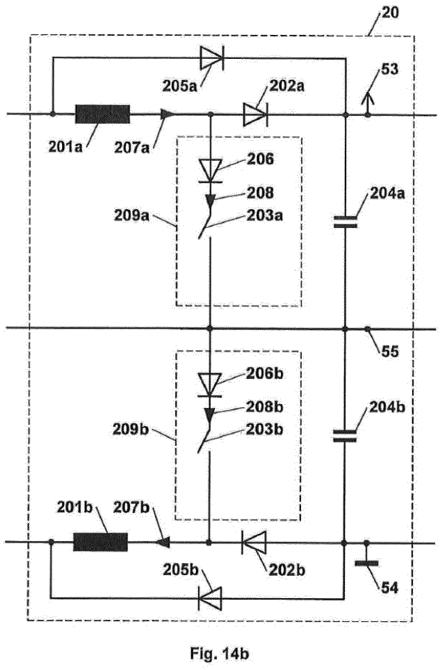

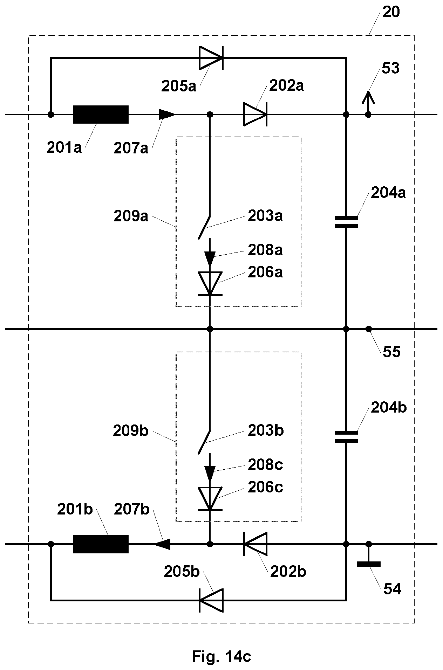

Im Folgenden wird eine vierte Ausführungsform näher erläutert. Bei einer Verwendung eines symmetrischen Hochsetzstellers als symmetrischen Spannungswandler 20 mit Mittenpotential 55 am Eingang nach Fig. 13 kann dieses, wie in Fig. 1a und Fig. 2a gezeigt, auch am Eingang eines Spannungswandlungssystems 1 mit Gleichspannungseingang an der Eingangsklemme 4 zur Verfügung stehen, sodass zwei Teileingangsspannungen 511 und 512 in einer Reihenschaltung angeschlossen werden können. In diesem Falle sollte eine Verpolung für die beiden Teileingangsspannungen 511 und 512 ausgeschlossen werden. Hierfür kann eine Verpolungsschutzdiode 206 im oberen Schalterzweig 209a des symmetrischen Hochsetzstellers als symmetrischen Spannungswandler 20 mit einem eingangsseitigen Mittenpotential 55 eingebracht werden und eine weitere Verpolungsschutzdiode im unteren Schalterzweig 209b eingebracht werden. Fig. 14 zeigt eine Variante, bei welcher die Schalter des oberen und des unteren Schalterzweiges jeweils gegen das Mittenpotential 55 angesteuert werden. Bei dieser Konfiguration beeinflusst die zusätzliche Verpolungsschutzdiode den Ansteuerkreis der Schalter nicht. Dabei ist der Anodenanschluss der Verpolungsschutzdiode 206 im oberen Schalterzweig 209a mit dem Knotenpunkt der Drossel 201a und der Freilauf-Diode 202a des Abschnitts im positiven Leitungszweig und der Kathodenanschluss mit dem Schalter 203a verbunden. Im unteren Schalterzweig 209b ist die Verpolungsschutzdiode 206c derart eingebracht, dass deren Kathodenanschluss mit dem Knotenpunkt der Drossel 201b und der Freilauf-Diode 202b des Abschnitts im negativen Leitungszweig und der Anodenanschluss mit dem Schalter 203b verbunden ist.

Der Schalter 203a ist ausgebildet, einen Schaltungspfad zwischen Eingangsklemmen des Spannungswandlers 20 zu schließen. Der Schaltungspfad verläuft von einer ersten Eingangsklemme des Spannungswandlers 20 über die Drossel 201a und den Schalterzweig 209a zu einer zweiten Eingangsklemme des Spannungswandlers 20. Der Schalter 203b ist ausgebildet, einen weiteren Schaltungspfad zwischen Eingangsklemmen des Spannungswandlers 20 zu schließen. Der weitere Schaltungspfad verläuft von einer dritten Eingangsklemme des Spannungswandlers 20 über die Drossel 201b und den Schalterzweig 209b zu der zweiten Eingangsklemme des Spannungswandlers 20.

Für Schalter, insbesondere Halbleiterschalter, die nicht gegen das Mittenpotential 55 angesteuert werden, ist auch die Einbringung der Verpolungsschutzdiode in die dem Mittenpotential 55 zugewandten Abschnitte der Schalterzweige 209a und 209b denkbar, wie in Fig. 14a gezeigt. Weiterhin ist die Einbringung der Verpolungsschutzdioden in die beiden Schalterzweige 209a und 209b jeweils oberhalb der Schalter 203a und 203b oder auch jeweils unterhalb der Schalter 203a und 203b möglich, wie in den Fig. 14b und Fig. 14c gezeigt. Ferner können weitere Elemente in den Schalterzweigen 209a und 209b eingebracht werden, beispielsweise Messwiderstände zur Stromerfassung der Ströme 208 / 208a und 208b / 208c durch die Schalter 203a und 203b. Die elektrische Ausgangsspannung des Spannungswandlers 20 wird durch einen Kondensator 204a und einen Kondensator 204b gestützt.

Es ergeben sich die gleiche Wirkungsweise gegenüber vertauschten Eingangspotentialen, wobei für den symmetrischen Hochsetzsteller als symmetrischen Spannungswandler 20 mit einem eingangsseitigen Mittenpotential 55 die Einbringung in beide Schalterzweige 209a und 209b sinnvoll sein kann, sowie die gleichen Vorteile hinsichtlich der elektrischen Verluste bezüglich des durch die Verpolungsschutzdioden fließenden Stroms, wie bereits hinsichtlich der ersten Ausführungsform beschrieben wurde.

Im Folgenden wird ein Verfahren zum Betreiben eines mehrstufigen Spannungswandlungssystems mit Gleichspannungseingang näher erläutert. Durch das Verfahren können elektrische Verluste beim Betrieb des Spannungswandlungssystems bei Nenneingangsspannung minimiert und ein optimaler Wirkungsgrad erreicht werden.

Es ist vorteilhaft, einen Betriebsspannungsbereich 86 eines Hauptspannungswandlers 40 des Spannungswandlungssystems 1 möglichst klein zu halten. Weiterhin ist es vorteilhaft, für einen Nennbetrieb einen derartigen Arbeitspunkt des gesamten Spannungswandlungssystems 1 vorzusehen, in welchem der Hochsetzsteller als Spannungswandler 20 nicht aktiv ist, um elektrische Verluste zu reduzieren. Daher wird der Hauptspannungswandler 40 für den Betrieb mit Spannungen im oberen Betriebsspannungsbereich 86 des gesamten Eingangsspannungsbereichs 81 optimiert, in welchem auch die Nennbetriebseingangsspannung 84 liegt. Dadurch ist der Hochsetzsteller als Spannungswandler 20 im Nennbetrieb nicht aktiv.

Der Hochsetzsteller als Spannungswandler 20 wird insbesondere dazu verwendet, einen möglichst weiten Eingangsspannungsbereich 81 zwischen einer minimalen Eingangsspannung 82 und einer maximalen Eingangsspannung 85 zu realisieren, ohne den Hauptspannungswandler 40 auch für diesen weiten Eingangsspannungsbereich 81 auslegen zu müssen. Daher wird der Betriebsspannungsbereich 86 des Hauptspannungswandlers 40 idealerweise so schmal wie möglich und nur so groß wie nötig gewählt. Umfasst der Hauptspannungswandler 40 beispielsweise einen Transformator, wird dadurch eine optimale Bauform des Transformators mit geringem Übersetzungsverhältnis erreicht.

Das Verfahren lässt sich bei Verwendung einer Zwischenkreisstufe 30 wie folgt beschreiben. Unterhalb einer minimalen Eingangsspannung 82 ist das gesamte Spannungswandlungssystem 1 im Eingangsspannungsbereich 811 nicht in Betrieb. Ist die Eingangsspannung 51 im Eingangsspannungsbereich 812 kleiner als die zu erreichende hochgesetzte Zwischenkreisspannung 83 und größer als die minimale Eingangsspannung 82, so ist der Hochsetzsteller als Spannungswandler 20 aktiv und setzt die Zwischenkreisspannung 52 in der Zwischenkreisstufe 30 auf die zu erreichende hochgesetzte Zwischenkreisspannung 83 hoch. Ab einer Eingangsspannung 51, die gleich oder größer der zu erreichenden hochgesetzten Zwischenkreisspannung 83 im Eingangsspannungsbereich 813 ist, ist der Hochsetzsteller als Spannungswandler 20 nicht aktiv und die Zwischenkreisstufe 30 wird bis zu der zulässigen maximalen Eingangsspannung 85 überflutet. Die Nennbetriebseingangsspannung 84 kann dabei größer als die zu erreichende hochgesetzte Zwischenkreisspannung 83 gewählt werden.

Eine Steuerung des Spannungswandlungssystems 1 kann den Hochsetzsteller als Spannungswandler 20 ansteuern und in Abhängigkeit von der Eingangsspannung 51 aktivieren und/oder deaktivieren. Gemäß einer Ausführungsform bildet die minimale Eingangsspannung 82 eine Vergleichsspannung, bei deren Überschreiten der Hochsetzsteller als Spannungswandler 20 aktiviert wird. Gemäß einer Ausführungsform bildet die zu erreichende hochgesetzte Zwischenkreisspannung 83 eine weitere Vergleichsspannung, bei deren Überschreiten der Hochsetzsteller als Spannungswandler 20 deaktiviert wird.

Für eine Ausführungsform des Spannungswandlungssystems 1 mit geteilter Zwischenkreisstufe 30 unter Verwendung eines symmetrischen Hochsetzstellers als symmetrischen Spannungswandler 20 aus Fig. 11 wird das Spannungswandlungssystem 1 wie zuvor beschrieben betrieben, wobei sich die Zwischenkreisspannung 52 aus den beiden Teilzwischenkreisspannungen 521 und 522 zusammensetzen kann, welche beispielsweise gleich groß sein können und jeweils die Hälfte der gesamten Zwischenkreisspannung 52 betragen können. Ist bei der Verwendung eines symmetrischen Hochsetzstellers als symmetrischen Spannungswandler 20 mit einem eingangsseitigen Mittenpotential aus Fig. 13 dieses als ein eingangsseitiges mittleres Potential 55a auch am Eingang des Spannungswandlungssystems 1 verfügbar, so ist auch in diesem Falle das Verfahren wie zuvor beschrieben anwendbar, wobei sich die Eingangsspannung 51 nun aus der Summe der Teileingangsspannungen 511 und 512 ergeben kann, welche beispielsweise gleich groß sein können und jeweils die Hälfte der gesamten Eingangsspannung 51 betragen können.

### BEZUGSZEICHENLISTE

- 1: Spannungswandlungssystem
- 2: Eingangsklemme
- 3: Eingangsklemme
- 4: Eingangsklemme

- 10: Eingangsstufe
- 11: Diode
- 12: Diode
- 20: Spannungswandler
- 30: Zwischenkreisstufe
- 40: Hauptspannungswandler
- 60: Ausgangsfilterstufe

- 51: Eingangsspannung
- 511: Teileingangsspannung
- 512: Teileingangsspannung
- 52: Zwischenkreisspannung
- 522: Teilzwischenkreisspannung
- 521: Teilzwischenkreisspannung
- 53: Positives Potential
- 54: Massepotential
- 55: Mittenpotential
- 55a: Mittleres Potential

- 201: Drossel
- 201a: Drossel
- 201b: Drossel
- 202: Freilauf-Diode
- 202a: Freilauf-Diode
- 202b: Freilauf-Diode
- 203: Schalter
- 203a: Schalter
- 203b: Schalter
- 204: Kondensator
- 204a: Kondensator
- 204b: Kondensator
- 205: Bypass-Diode
- 205a: Bypass-Diode
- 205b: Bypass-Diode
- 206: Verpolungsschutzdiode
- 206a: Verpolungsschutzdiode
- 206b: Verpolungsschutzdiode
- 206c: Verpolungsschutzdiode
- 207: Strom
- 207a: Strom
- 207b: Strom
- 208: Strom
- 208a: Strom
- 208b: Strom
- 208c: Strom
- 209: Schalterzweig
- 209a: Schalterzweig
- 209b: Schalterzweig

- 2031: MOSFET
- 2032: IGBT
- 2033: Freilauf-Diode
- 2034: JFET
- 2035: IGBT
- 2036: JFET
- 2037: MOSFET

- 701: Effektivwert
- 702: Effektivwert
- 711: Spitzenwert

- 81: Eingangsspannungsbereich
- 811: Eingangsspannungsbereich
- 812: Eingangsspannungsbereich
- 813: Eingangsspannungsbereich
- 82: Minimale Eingangsspannung
- 83: Zwischenkreisspannung
- 84: Nennbetriebseingangsspannung
- 85: Maximale Eingangsspannung
- 86: Betriebsspannungsbereich

## Patentansprüche

1. Spannungswandler (20), mit:
einer ersten Eingangsklemme und einer zweiten Eingangsklemme, wobei eine elektrische Eingangsspannung zwischen die erste Eingangsklemme und die zweite Eingangsklemme anlegbar ist;
einer ersten Ausgangsklemme und einer zweiten Ausgangsklemme, wobei eine elektrische Ausgangsspannung zwischen der ersten Ausgangsklemme und der zweiten Ausgangsklemme abgreifbar ist;
einem Kondensator (204, 204a, 204b), welcher zwischen der ersten Ausgangsklemme und der zweiten Ausgangsklemme angeordnet ist;
einem Schalterzweig (209, 209a, 209b) mit einem Schalter (203, 203a, 203b), wobei der Schalter (203, 203a, 203b) ausgebildet ist, einen Schaltungspfad (209a) zwischen der ersten Eingangsklemme und einem Mittenpotential (55) des Spannungswandlers (20) zu schließen;
einem weiteren Schalterzweig (209, 209a, 209b) mit einem weiteren Schalter (203, 203a, 203b), wobei der weitere Schalter (203, 203a, 203b) ausgebildet ist, einen weiteren Schaltungspfad (209b) zwischen dem Mittenpotential (55) und der zweiten Eingangsklemme zu schließen;
einer Verpolungsschutzdiode (206, 206a, 206b, 206c), welche in dem Schalterzweig (209, 209a, 209b) in Reihe mit dem Schalter (203, 203a, 203b) oder in dem weiteren Schalterzweig (209b) in Reihe mit dem weiteren Schalter (203, 203a, 203b) geschaltet ist;
einem Strommesswiderstand, welcher in dem Schalterzweig (209, 209a, 209b) in Reihe mit dem Schalter (203, 203a, 203b) und der Verpolungsschutzdiode (206, 206a, 206b, 206c) geschaltet ist;
einer Drossel (201, 201a, 201b), welche zwischen der ersten Eingangsklemme und einem Anschluss des Schalterzweigs (209, 209a, 209b) angeordnet ist;
einer Freilauf-Diode (202, 202a, 202b), welche zwischen dem Anschluss des Schalterzweigs (209, 209a, 209b) und der ersten Ausgangsklemme angeordnet ist; und
einer Bypass-Diode (205, 205a, 205b), welche zwischen der ersten Eingangsklemme und der ersten Ausgangsklemme angeordnet ist,
einer weiteren Drossel (201b), welche zwischen der zweiten Eingangsklemme und einem Anschluss des weiteren Schalterzweigs (209b) angeordnet ist;
einer weiteren Freilauf-Diode (202b), welche zwischen dem Anschluss des weiteren Schalterzweigs (209b) und der zweiten Ausgangsklemme angeordnet ist; und
einer weiteren Bypass-Diode (205b), welche zwischen der zweiten Eingangsklemme und der zweiten Ausgangsklemme angeordnet ist,
wobei die Verpolungsschutzdiode (206, 206a, 206b, 206c) ausgebildet ist, bei einer ersten Polarität der Eingangsspannung einen Strom (208, 208a, 208b, 208c) durch den Schalterzweig (209, 209a, 209b) zu leiten, und bei einer zweiten Polarität der Eingangsspannung einen Strom (208, 208a, 208b, 208c) durch den Schalterzweig (209, 209a, 209b) zu sperren,
wobei der Strom (208, 208a) durch die Verpolungsschutzdiode (206, 206a) nur dann fließt, wenn der Schalter (203) geschlossen ist, und
wobei der Strom (208, 208a) in gepulster Form fließt und einen geringeren Effektivwert (702) aufweist als ein Strom (207) durch die Drossel (201), dessen Effektivwert (701) dem eines Eingangsstroms des Spannungswandlers (20) entspricht und einen entsprechenden Strom-Spitzenwert (711) erreicht;
wobei die Verpolungsschutzdiode (206, 206c) nur in einem des Schalterzweigs (209a) oder des weiteren Schalterzweigs (209b) eingebracht ist;
wobei ein Anodenanschluss der Verpolungsschutzdiode (206) an einem Knotenpunkt der Drossel (201a) und der Freilauf-Diode (202a) des Spannungswandlers (20) angeschlossen ist und ein Kathodenanschluss der Verpolungsschutzdiode (206) an den Schalter (203a) angeschlossen ist; oder
wobei ein Kathodenanschluss der Verpolungsschutzdiode (206c) an einem Anschluss des weiteren Schalterzweigs (209b) angeschlossen ist und ein Anodenanschluss der Verpolungsschutzdiode (206) an den weiteren Schalter (203b) angeschlossen ist.

2. Spannungswandler (20) nach Anspruch 1, wobei ein Anschluss der Verpolungsschutzdiode (206, 206a, 206b, 206c), insbesondere ein Anodenanschluss oder ein Kathodenanschluss der Verpolungsschutzdiode (206, 206a, 206b, 206c), unmittelbar an einen Anschuss des Schalters (203, 203a, 203b) geschaltet ist.

3. Spannungswandler (20) nach Anspruch 1 oder 2, wobei der Schalter (203, 203a, 203b) ein Bipolar-Transistor, ein Metall-Oxid-Halbleiter Feldeffekt-Transistor (2031, 2037), ein Bipolar-Transistor mit isolierter Gate-Elektrode (2032, 2035), oder ein Sperrschicht Feldeffekt-Transistor (2034, 2036) ist.

4. Spannungswandler (20) nach einem der vorstehenden Ansprüche, wobei die Verpolungsschutzdiode (206, 206a, 206b, 206c) eine Schottky-Diode, insbesondere eine Siliziumcarbid Schottky-Diode, ist.

5. Spannungswandler (20) nach einem der vorstehenden Ansprüche, wobei der Spannungswandler (20) ein Gleichspannungswandler, insbesondere ein Hochsetzsteller, ist.

6. Spannungswandlungssystem (1), mit:
einem Spannungswandler (20) nach einem der Ansprüche 1 bis 5;
einem Hauptspannungswandler (40), welcher mit dem Spannungswandler (20) elektrisch verbunden ist, wobei der Hauptspannungswandler (40) dem Spannungswandler (20) nachgeschaltet ist; und
einer Steuerung, welche ausgebildet ist, den Schalter (203, 203a, 203b) des Spannungswandlers (20) anzusteuern, wobei die Steuerung ausgebildet ist, die Eingangsspannung des Spannungswandlers (20) mit einer Vergleichsspannung zu vergleichen, und wobei die Steuerung ausgebildet ist, den Spannungswandler (20) zu aktivieren, falls die elektrische Eingangsspannung des Spannungswandlers (20) die Vergleichsspannung überschreitet.

7. Spannungswandlungssystem (1) nach Anspruch 6, wobei die Steuerung ausgebildet ist, die Eingangsspannung des Spannungswandlers (20) mit einer weiteren Vergleichsspannung zu vergleichen, wobei die weitere Vergleichsspannung größer als die Vergleichsspannung ist, und wobei die Steuerung ausgebildet ist, den Spannungswandler (20) zu deaktivieren, falls die elektrische Eingangsspannung des Spannungswandlers (20) die weitere Vergleichsspannung überschreitet.

8. Verfahren zum Betreiben eines Spannungswandlungssystems (1), wobei das Spannungswandlungssystem (1) einen Spannungswandler (20) nach einem der Ansprüche 1 bis 5, einen Hauptspannungswandler (40), und eine Steuerung umfasst, wobei der Hauptspannungswandler (40) mit dem Spannungswandler (20) elektrisch verbunden ist, wobei der Hauptspannungswandler (40) dem Spannungswandler (20) nachgeschaltet ist, wobei die Steuerung ausgebildet ist, den Schalter (203, 203a, 203b) des Spannungswandlers (20) anzusteuern, mit:
Vergleichen der Eingangsspannung des Spannungswandlers (20) mit einer Vergleichsspannung durch die Steuerung; und
Aktivieren des Spannungswandlers (20) durch die Steuerung, falls die elektrische Eingangsspannung des Spannungswandlers (20) die Vergleichsspannung überschreitet.

9. Verfahren nach Anspruch 8, mit:
Vergleichen der Eingangsspannung des Spannungswandlers (20) mit einer weiteren Vergleichsspannung durch die Steuerung, wobei die weitere Vergleichsspannung größer als die Vergleichsspannung ist; und
Deaktivieren des Spannungswandlers (20) durch die Steuerung, falls die elektrische Eingangsspannung des Spannungswandlers (20) die weitere Vergleichsspannung überschreitet.

## Claims

1. A voltage converter (20), comprising:
a first input terminal and a second input terminal, wherein an electrical input voltage is applyable between the first input terminal and the second input terminal;
a first output terminal and a second output terminal, wherein an electrical output voltage is tappable between the first output terminal and the second output terminal;
a capacitor (204, 204a, 204b), which is arranged between the first output terminal and the second output terminal;
a switch branch (209, 209a, 209b) comprising a switch (203, 203a, 203b), wherein the switch (203, 203a, 203b) is configured to close a circuit path (209a) between the first input terminal and a middle potential (55) of the voltage converter (20);
a further switch branch (209, 209a, 209b) with a further switch (203, 203a, 203b), wherein the further switch (203, 203a, 203b) is configured to close a further circuit path (209b) between the middle potential (55) and the second input terminal;
a reverse polarity protection diode (206, 206a, 206b, 206c), which is connected in the switch branch (209, 209a, 209b) in series with the switch (203, 203a, 203b) or in the further switch branch (209b) in series with the further switch (203, 203a, 203b);
a current measuring resistor, which is connected in the switch branch (209, 209a, 209b) in series with the switch (203, 203a, 203b) and the reverse polarity protection diode (206, 206a, 206b, 206c);
a choke (201, 201a, 201b), which is arranged between the first input terminal and a terminal of the switch branch (209, 209a, 209b);
a freewheeling diode (202, 202a, 202b), which is arranged between the terminal of the switch branch (209, 209a, 209b) and the first output terminal; and
a bypass diode (205, 205a, 205b), which is arranged between the first input terminal and the first output terminal,
a further choke (201b), which is arranged between the second input terminal and a terminal of the further switch branch (209b);
a further freewheeling diode (202b), which is arranged between the terminal of the further switch branch (209b) and the second output terminal; and
a further bypass diode (205b), which is arranged between the second input terminal and the second output terminal,
wherein the reverse polarity protection diode (206, 206a, 206b, 206c) is configured to conduct a current (208, 208a, 208b, 208c) through the switch branch (209, 209a, 209b) in case of a first polarity of the input voltage and to block a current (208, 208a, 208b, 208c) through the switch branch (209, 209a, 209b) in case of a second polarity of the input voltage,
wherein the current (208, 208a) flows through the reverse polarity protection diode (206, 206a) only when the switch (203) is closed, and
wherein the current (208, 208a) flows in pulsed form and has a lower effective value (702) than a current (207) through the choke (201), whose effective value (701) corresponds to that of an input current of the voltage converter (20) and reaches a corresponding current peak (711);
wherein the reverse polarity protection diode (206, 206c) is only arranged in one of the switch branch (209a) or the further switch branch (209b);
wherein an anode terminal of the reverse polarity protection diode (206) is connected to a node of the choke (201a) and the freewheeling diode (202a) of the voltage converter (20) and a cathode terminal of the reverse polarity protection diode (206) is connected to the switch (203a); or
wherein a cathode terminal of the reverse polarity protection diode (206c) is connected to a terminal of the further switch branch (209b) and an anode terminal of the reverse polarity protection diode (206) is connected to the further switch (203b).

2. The voltage converter (20) according to claim 1, wherein a terminal of the reverse polarity protection diode (206, 206a, 206b, 206c), in particular an anode terminal or a cathode terminal of the reverse polarity protection diode (206, 206a, 206b, 206c), is directly connected to a terminal of the switch (203, 203a, 203b).

3. The voltage converter (20) according to claim 1 or 2, wherein the switch (203, 203a, 203b) is a bipolar transistor, a metal-oxide-semiconductor field effect transistor (2031, 2037), a bipolar transistor comprising an insulated gate electrode (2032, 2035), or a junction field effect transistor (2034, 2036).

4. The voltage converter (20) according to one of the preceding claims, wherein the reverse polarity protection diode (206, 206a, 206b, 206c) is a Schottky diode, in particular a silicon carbide Schottky diode.

5. The voltage converter (20) according to one of the preceding claims, wherein the voltage converter (20) is a DC voltage converter, in particular a boost converter.

6. A voltage conversion system (1), comprising:
a voltage converter (20) according to one of the claims 1 to 5;
a main voltage converter (40), which is electrically connected with the voltage converter (20), wherein the main voltage converter (40) is connected downstream of the voltage converter (20); and
a controller, which is configured to control the switch (203, 203a, 203b) of the voltage converter (20), wherein the controller is configured to compare the input voltage of the voltage converter (20) with a comparison voltage, and wherein the controller is configured to activate the voltage converter (20) if the electrical input voltage of the voltage converter (20) exceeds the comparison voltage.

7. The voltage conversion system (1) according to claim 6, wherein the controller is configured to compare the input voltage of the voltage converter (20) with a further comparison voltage, wherein the further comparison voltage is greater than the comparison voltage, and wherein the controller is configured to deactivate the voltage converter (20) if the electrical input voltage of the voltage converter (20) exceeds the further comparison voltage.

8. A method for operating a voltage conversion system (1), wherein the voltage conversion system (1) comprises a voltage converter (20) according to one of the claims 1 to 5, a main voltage converter (40) and a controller, wherein the main voltage converter (40) is electrically connected to the voltage converter (20), wherein the main voltage converter (40) is connected downstream of the voltage converter (20), wherein the controller is configured to activate the switch (203, 203a, 203b) of the voltage converter (20), the method comprising:
comparing the input voltage of the voltage converter (20) with a comparison voltage by the controller; and
activating the voltage converter (20) by the controller if the electrical input voltage of the voltage converter (20) exceeds the comparison voltage.

9. The method of claim 8, comprising:
comparing the input voltage of the voltage converter (20) with a further comparison voltage by the controller, wherein the further comparison voltage is greater than the comparison voltage; and
deactivating the voltage converter (20) by the controller if the electrical input voltage of the voltage converter (20) exceeds the further comparison voltage.

## Revendications

1. Convertisseur de tension (20), comprenant :
une première borne d'entrée et une deuxième borne d'entrée, la tension d'entrée électrique pouvant être appliquée entre la première borne d'entrée et la deuxième borne d'entrée ;
une première borne de sortie et une deuxième borne de sortie, la tension de sortie électrique pouvant être prélevée entre la première borne de sortie et la deuxième borne de sortie ;
un condensateur (204, 204a, 204b), lequel est disposé entre la première borne de sortie et la deuxième borne de sortie ;
une branche de commutateur (209, 209a, 209b) comprenant un commutateur (203, 203a, 203b), le commutateur (203, 203a, 203b) étant configuré pour fermer un chemin de commutation (209a) entre la première borne d'entrée et un potentiel médian (55) du convertisseur de tension (20) ;
une branche de commutateur supplémentaire (209, 209a, 209b) comprenant un commutateur supplémentaire (203, 203a, 203b), le commutateur supplémentaire (203, 203a, 203b) étant configuré pour fermer un chemin de commutation supplémentaire (209b) entre le potentiel médian (55) et la deuxième borne d'entrée ;
une diode de protection contre les inversions de polarité (206, 206a, 206b, 206c), laquelle est branchée en série avec le commutateur (203, 203a, 203b) dans la branche de commutateur (209, 209a, 209b) ou en série avec le commutateur supplémentaire (203, 203a, 203b) dans la branche de commutateur supplémentaire (209b) ;
une résistance de mesure du courant, laquelle est branchée en série avec le commutateur (203, 203a, 203b) et la diode de protection contre les inversions de polarité (206, 206a, 206b, 206c) dans la branche de commutateur (209, 209a, 209b) ;
une bobine (201, 201a, 210b), laquelle est disposée entre la première borne d'entrée et un raccord de la branche de commutateur (209, 209a, 209b) ;
une diode de roue libre (202, 202a, 202b), laquelle est disposée entre le raccord de la branche de commutateur (209, 209a, 209b) et la première borne de sortie ; et
une diode de dérivation (205, 205a, 205b), laquelle et disposée entre la première borne d'entrée et la première borne de sortie,
une bobine supplémentaire (201b), laquelle est disposée entre la deuxième borne d'entrée et un raccord de la branche de commutateur supplémentaire (209b) ;
une diode de roue libre supplémentaire (202b), laquelle est disposée entre le raccord de la branche de commutateur supplémentaire (209b) et la deuxième borne de sortie ; et
une diode de dérivation supplémentaire (205b), laquelle est disposée entre la deuxième borne d'entrée et la deuxième borne de sortie,
la diode de protection contre les inversions de polarité (206, 206a, 206b, 206c) étant configurée pour, en présence d'une première polarité de la tension d'entrée, conduire un courant (208, 208a, 208b, 208c) à travers la branche de commutateur (209, 209a, 209b) et, en présence d'une deuxième polarité de la tension d'entrée, bloquer un courant (208, 208a, 208b, 208c) à travers la branche de commutateur (209, 209a, 209b),
le courant (208, 208a) ne circulant alors à travers la diode de protection contre les inversions de polarité (206, 206a) que lorsque le commutateur (203) est fermé, et
le courant (208, 208a) circulant sous une forme impulsionnelle et présentent une valeur efficace (702) plus faible qu'un courant (207) à travers la bobine (201), dont la valeur efficace (701) correspond à celle d'un courant d'entrée du convertisseur de tension (20) et atteint une valeur de crête de courant (711) correspondante ;
la diode de protection contre les inversions de polarité (206, 206c) n'étant incorporée que dans l'une parmi la branche de commutateur (209a) ou la branche de commutateur supplémentaire (209b) ;
un raccord d'anode de la diode de protection contre les inversions de polarité (206) étant raccordé à un point nodal de la bobine (201a) et de la diode de roue libre (202a) du convertisseur de tension (20) et un raccord de cathode de la diode de protection contre les inversions de polarité (206) étant raccordé au commutateur (203a) ; ou
un raccord de cathode de la diode de protection contre les inversions de polarité (206c) étant raccordé à un raccord de la branche de commutateur supplémentaire (209b) et un raccord de cathode de la diode de protection contre les inversions de polarité (206) étant raccordé au commutateur supplémentaire (203b).

2. Convertisseur de tension (20) selon la revendication 1, un raccord de la diode de protection contre les inversions de polarité (206, 206a, 206b, 206c), notamment un raccord d'anode ou un raccord de cathode de la diode de protection contre les inversions de polarité (206, 206a, 206b, 206c), étant branché directement à un raccord du commutateur (203, 203a, 203b).

3. Convertisseur de tension (20) selon la revendication 1 ou 2, le commutateur (203, 203a, 203b) étant un transistor bipolaire, un transistor à effet de champ à grille métal-oxyde (2031, 2037), un transistor bipolaire avec électrode de gâchette isolée (2032, 2035) ou un transistor à effet de champ à couche de blocage (2034, 2036) .

4. Convertisseur de tension (20) selon l'une des revendications précédentes, la diode de protection contre les inversions de polarité (206, 206a, 206b, 206c) étant une diode Schottky, notamment une diode Schottky au carbure de silicium.

5. Convertisseur de tension (20) selon l'une des revendications précédentes, le convertisseur de tension (20) étant un convertisseur de tension continue, notamment un convertisseur élévateur.

6. Système de conversion de tension (1), comprenant :
un convertisseur de tension (20) selon l'une des revendications 1 à 5 ;
un convertisseur de tension principale (40), lequel est relié électriquement au convertisseur de tension (20), le convertisseur de tension principale (40) étant branché en aval du convertisseur de tension (20) ; et
une commande, laquelle est configurée pour commander le commutateur (203, 203a, 203b) du convertisseur de tension (20), la commande étant configurée pour comparer la tension d'entrée du convertisseur de tension (20) avec une tension de comparaison, et la commande étant configurée pour activer le convertisseur de tension (20) dans le cas où la tension d'entrée électrique du convertisseur de tension (20) devient supérieure à la tension de comparaison.

7. Système de conversion de tension (1) selon la revendication 6, la commande étant configurée pour comparer la tension d'entrée du convertisseur de tension (20) avec une tension de comparaison supplémentaire, la tension de comparaison supplémentaire étant supérieure à la tension de comparaison, et la commande étant configurée pour désactiver le convertisseur de tension (20) dans le cas où la tension d'entrée électrique du convertisseur de tension (20) devient supérieure à la tension de comparaison supplémentaire.

8. Procédé pour faire fonctionner un système de conversion de tension (1), le système de conversion de tension (1), comprenant un convertisseur de tension (20) selon l'une des revendications 1 à 5, un convertisseur de tension principale (40) et une commande, le convertisseur de tension principale (40) étant relié électriquement au convertisseur de tension (20), le convertisseur de tension principale (40) étant branché en aval du convertisseur de tension (20), la commande étant configurée pour commander le commutateur (203, 203a, 203b) du convertisseur de tension (20), comprenant :
comparaison de la tension d'entrée du convertisseur de tension (20) avec une tension de comparaison par la commande ; et
activation du convertisseur de tension (20) par la commande dans le cas où la tension d'entrée électrique du convertisseur de tension (20) devient supérieure à la tension de comparaison.

9. Procédé selon la revendication 8, comprenant :
comparaison de la tension d'entrée du convertisseur de tension (20) avec une tension de comparaison supplémentaire par la commande, la tension de comparaison supplémentaire étant supérieure à la tension de comparaison ; et
désactivation du convertisseur de tension (20) par la commande dans le cas où la tension d'entrée électrique du convertisseur de tension (20) devient supérieure à la tension de comparaison supplémentaire.
